# EUROPÄISCHE PATENTSCHRIFT

(11) **EP 0 743 470 B1**
(45) Veröffentlichungstag und Bekanntmachung des Hinweises auf die Patenterteilung: **09.08.2000**
(21) Anmeldenummer: 96107642.9
(22) Anmeldetag: 14.05.1996
(51) Int. Cl.: F16D 65/16

(54) **Bremsaktor für elektrisch betätigbare Fahrzeugbremse**
Brake actuator for electrically actuated vehicle brake
Moteur de frein pour frein à actionnement électrique de véhicule

(30) Priorität: 19.05.1995 DE 19518412; 18.11.1995 DE 19543098
(43) Veröffentlichungstag der Anmeldung: 20.11.1996
(73) Patentinhaber: Continental Aktiengesellschaft, 30165 Hannover (DE); DaimlerChrysler AG, 70567 Stuttgart (DE)
(72) Erfinder: Schöner, Hans-Peter, Dr., 60528 Frankfurt (DE); Bergmann, Friedhelm, 31812 Bad Pyrmont (DE); Dieckmann, Thomas, Dr., 30982 Pattensen (DE); Prinzler, Hubertus, 30853 Langenhagen (DE)

(56) Entgegenhaltungen:
- DE-A- 3 410 006
- DE-A- 3 739 059
- US-A- 4 037 893
- US-A- 4 865 162

## Beschreibung

Die Erfindung betrifft einen Bremsaktor für eine elektrisch betätigbare Fahrzeugbremse, wie im Oberbegriff von Patentanspruch 1 angegeben. Ein derartiger Bremsaktor ist aus US-A-4 865 162 bekannt.

In der DE 34 10 006 ist eine Vorrichtung zur Steuerung einer Bremsanlage beschrieben, die solch einen Bremsaktor antreibt. Diese Bremsanlage zeichnet sich unter anderem dadurch aus, daß die elektrisch betätigbare Radbremse als Scheibenbremse ausgebildet ist, deren Bremsbacken mit Hilfe eines als elektrischer Antrieb dienenden Elektromotors an die Bremsscheibe anpreßbar sind, und daß der Elektromotor über eine in Verschieberichtung der Bremsbacken angeordneten Spindel und über ein Kugelumlaufgetriebe mit einem auf die Bremsbacke einwirkenden, axial verschiebbar gelagerten Kolben verbunden ist.

Das hier verwendete Kugelumlaufgetriebe weist zwar geringe Reibungswerte auf. Um eine hinreichend große Kraft zu übertragen, können aber die Kugeln des Getriebes nicht beliebig klein gewählt werden. In praktisch durchgeführten Versuchen hat sich eine Kugelgröße von ca 3 mm Durchmesser als Minimum herausgestellt. Dies erfordert eine Steigung der Spindel von ca 4 mm pro Umdrehung. Bei einer derartig großen Steigung lassen sich mit einfachen Spindeltrieben keine ausreichend großen Kraftübersetzungen für die Zuspannkraft am Bremsbelag erzielen. Hierfür ist in der Regel mindestens eine weitere Getriebestufe erforderlich.

Will man mit nur einer einzigen Getriebestufe auskommen, so benötigt man einen entsprechend drehmomentstarken und damit schweren Elektromotor. Der ist teuer. Auch erhöhen derartig schwere Elektromotoren in unvorteilhafter Weise die ungefederte Masse des Fahrzeugs.

Andererseits wurde bereits vorgeschlagen, eine zweite Getriebestufe, z. B. zweite Planetenstufe, zu verwenden. Hierdurch kann zwar auf einen großdimensionierten Elektromotor verzichtet werden, aber der Bremsaktor verkompliziert sich nun durch die zweite Planetenstufe. Dies wird schon deshalb als nachteilig empfunden, weil bereits einstufige Planetengetriebe relativ kompliziert und aufwendig und damit teuer sind.

Schließlich liefert das ein- oder mehrstufige Planetengetriebe zwar eine mehr oder weniger starke Untersetzung der Rotationsbewegung. Diese muß aber noch mittels einer Spindel in eine Translationsbewegung umgewandelt werden.

Die DE 42 29 042 beschreibt einen solchen Bremsaktor, der mit einem Elektromotor und einer Gewindespindel versehen ist. Dabei wird die Gewindespindel von dem Motor angetrieben, und eine Spindelmutter steht mit einem an eine Hydraulikkammer angeschlossenen ersten Hydraulikkolben in Eingriff. Ein zweiter Hydraulikkolben kann zwecks Durchführung eines Bremsvorgangs auf einen Reibbelag einwirken.
Da ein solcher Bremsaktor - trotz einer gewissen Kraftübersetzung mittels der Hydraulik - einen überdimensionalen Elektromotor als Kraftquelle benötigen würde, kommen zur Erzielung einer ausreichenden übersetzung des vom Motor erzeugten Drehmoments bei sämtlichen in der DE 42 29 042 beschriebenen Ausführungsformen zusätzliche, zwischen Motor und Umsetzeinrichtung geschaltete übersetzungsgetriebe zum Einsatz.
Insbesondere durch die Mehrstufigkeit ist ein solcher Bremsaktor insgesamt aufwendig und kompliziert und damit nicht nur teuer in seiner Herstellung sondern auch störanfällig im Betrieb.

Es existiert eine weitere Vielzahl von Ansätzen zum Aufbau eines kompakten, elektrisch betätigbaren Bremsaktors. Mit keinem Lösungsansatz ist es bisher gelungen, aus der Drehbewegung der Antriebsmotoren in nur einer Getriebestufe die zum Betätigen einer Bremse erforderlichen Kräfte aufzubringen.

Aufgabe der Erfindung ist es, unter Verwendung eines Spindeldirektantriebs, ohne zusätzliche Getriebestufe(n), bzw. ohne weitere Bauelemente, direkt die zum Zuspannen einer Bremse erforderlichen Kräfte zu erzeugen.

Erfindungsgemäß wird diese Aufgabe bei einem Bremsaktor des obigen Typs entsprechend dem Patentanspruch 1 gelöst. Vorteilhafte Ausgestaltungen ergeben sich aus den Unteransprüchen.

Die Verwendung einer Planeten-Wälz-Gewindespindel zur Umwandlung einer schnellen Drehbewegung eines Elektromotors in eine langsame Axialbewegung eines Reibbelags in einem elektrisch betätigbaren Bremsaktor ermöglicht die Kraftübersetzung in nur einer einzigen Getriebestufe.

Das Planeten-Wälz- oder -Rollenlager weist sehr niedrige Reibungswerte auf. Trotz der Verwendung von Walzen oder Rollen kann die wirksame Steigung des Spindelsystems extrem klein gewählt werden. Damit ergibt sich eine entsprechend große Kraftübersetzung.

Die Anwendung von Planeten-Wälz-Gewindespindeln zur Umwandlung einer Drehbewegung in eine Axialbewegung ist an sich bekannt (siehe z. B. OS 37 39 059 mit weiteren Nachweisen). Durch die Einführung dieser Getriebetechnik wurden auf verschiedenen Gebieten neue Möglichkeiten bei der Kraftübertragung erschlossen. Z. B. die bei Roboteranwendungen erhobene Forderung nach einem Spindelsystem mit sehr kleiner Steigung und entsprechend großer Präzision läßt sich mit derartigen Planeten-Wälz-Gewindespindeln realisieren.

Durch die Erfindung wird die an sich bekannte Getriebetechnik der Planeten-Wälz-Gewindespindeln zur übertragung der Zuspannkraft von einem Elektromotor auf einen Reibbelag eines Bremsaktors einer elektrisch betätigbaren Fahrzeugbremse erstmals verwendet.

Zum Antrieb der Bremse kommt ein kompakter Elektromotor zum Einsatz, der sich durch geringes Gewicht und kleines Bauvolumen auszeichnet und somit direkt an der Radbremse eingesetzt werden kann. Der Läufer des Motors ist mit der Spindelstange der Planeten-Wälz-Gewindespindel (PWG-Spindel) drehfest verbunden. Die Spindelmutter ist verdrehgesichert und ihrerseits direkt mit dem Betätigungskolben der Bremse verbunden, der den Reibbelag gegen die Bremsscheibe preßt.

Die PWG-Spindel gestattet es, sehr geringe effektive Steigungen zu realisieren, die mit anderen Spindeltypen prinzipbedingt nicht erreicht werden können. So lassen sich beispielsweise Steigungen im Bereich von 1/10 mm realisieren. Damit kann diese eine Übersetzungsstufe das begrenzte Drehmoment des Antriebsmotors in ausreichende Längskräfte zum Zuspannen der Bremse umwandeln.

Von besonderem Vorteil ist weiterhin bei diesem Aktuator, daß die erforderliche Verschleißnachstellung auf sehr einfache Weise realisiert werden kann. Der gewünschte Nachstellweg kann einfach als zusätzlicher Verfahrweg auf der Spindelstange bereitgestellt werden.

Eine vorteilhafte Ausgestaltung der Erfindung wird im Kennzeichen des Anspruchs 5 offenbart. Der Elektromotor ist drehfest mit der Spindelmutter verbunden, wobei die Spindelstange auf den Bremskolben wirkt. Weiter wird gemäß dem Kennzeichen im Patentanspruch 6 vorgeschlagen, daß der Läufer des Elektromotors einen inneren Durchmesser aufweist, der die Spindelstange aufnehmen kann und die Nachsteilbewegung ermöglicht. Durch diese Ausbildung wird die Baulänge des Bremsaktors reduziert, da die Nachstellbewegung in den Bereich des Elektromotors verlegt wird.

Insgesamt zeichnet sich der erfindungsgemäße Bremsaktor durch eine kompakte, leichte Bauweise aus. Er besteht aus nur wenigen Bauteilen. Aufgrund der geringen Reibungsverluste weist er einen hohen Wirkungsgrad auf.

Im folgenden wird die Erfindung anhand eines Ausführungsbeispiels näher beschrieben.

Fig. 1 zeigt einen Längsschnitt durch einen erfindungsgemäßen Bremsaktor.

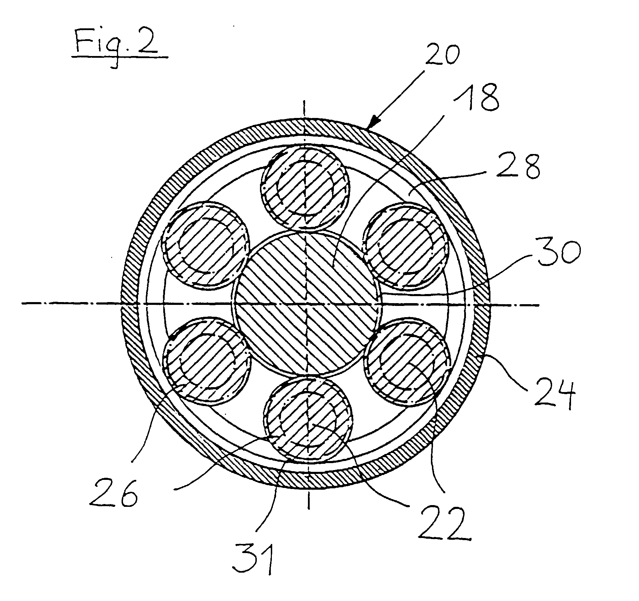

Fig. 2 zeigt den Querschnitt AA' durch die Planeten-Wälz-Gewindespindel des Bremsaktors.

Fig. 3 zeigt den Aussschnitt B aus den Abbildungen 1 und 4.

Fig. 4 zeigt einen Längsschnitt durch eine alternative Ausführungsform des erfindungsgemäßen Bremsaktors.

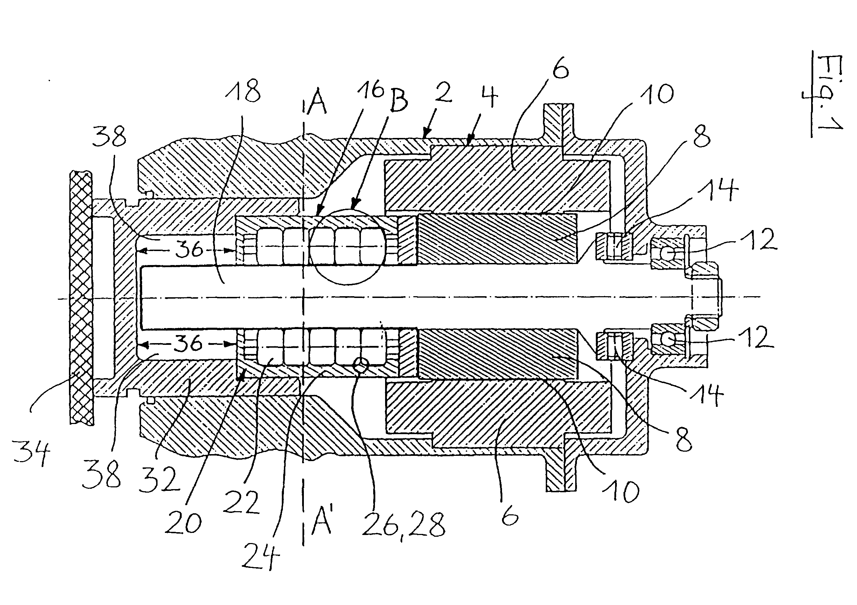

In Fig. 1 ist ein kompletter Bremsaktor 2 im Längsschnitt dargestellt, mit einem Elektromotor 4 rechts in der Abbildung und mit einem Bremsbelag (Reibbelag) 34 links im Bild. Der Elektromotor 4 besteht aus einem Ständer 6 und einem Läufer 8 und einem dazwischen befindlichen Luftspalt 10. Der Elektromotor 4 steht über eine Planeten-Wälz-Gewindespindel 16 mit dem Bremsbelag 34 in Wirkverbindung. Aus lagerungstechnischen Gründen wird bei diesem Ausführungsbeispiel die Spindelstange 18 angetrieben und nicht die Spindelmutter 20. Die Spindelstange 18 ist drehfest mit dem Läufer 8 des Motors 4 verbunden. Die Spindelstange 18 stellt hier gleichzeitig die Achse des Elektromotors 4 dar. An ihrer Rückseite ist die Spindelstange 18 mit einem Radial- 14 und mit einem Axiallager (Drucklager) 12, welches hier ein kleines Tonnenlager ist, abgestützt. Diese Abstützung ist erforderlich, da die gesamten über den Motor 4 übertragenen Axialkräfte abgestützt werden müssen.

Der Bremsaktor 2 funktioniert folgendermaßen: die Spindel 16 wird vom Elektromotor 4 angetrieben, dabei wird die verdrehsicher montierte Mutter 20 samt dem am Bremskolben 32 befestigten Bremsbelag 34 vorgetrieben (oder zurückgefahren). Bei Verschleiß oder für die genauere Justage des Luftspalts der Bremse kann die Spindelstange 18 gegenüber dem Bremskolben 32 in einem Hohlraum 38 um einen Nachstellweg 36 von ca 25 mm nachgestellt werden. Der Hub des Bremskolbens 32 nebst Bremsbelag 34 kann bei starker Betätigung der Bremse rund 1 mm betragen.

Die Spindel 16 besteht hier nicht einfach aus einer Spindel(stange) 18 mit sich darauf schraubenförmig abwälzender (Spindel)mutter 20. Die Spindel(stange) 18 ist hier umgeben von einer Anzahl walzenförmiger Rollenkörper 22. Die mit Umfangsprofilierung 31 versehenen Walzen 22 befinden sich innerhalb der Spindelmutter 20 zwischen der Spindelstange 18 und dem Gehäuse 24 der Spindelmutter 20.

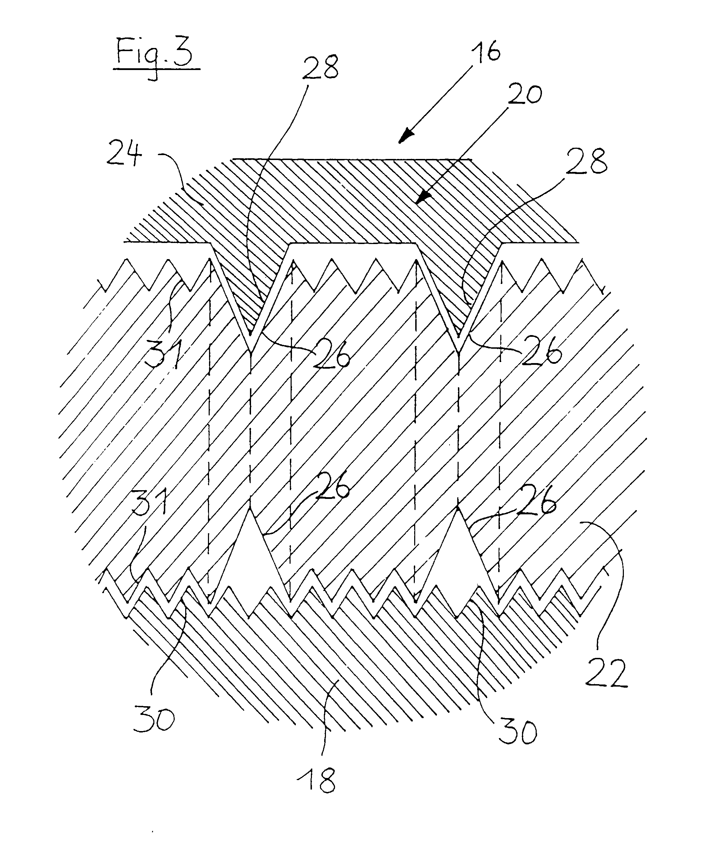

Zur Halterung und Lagerung sind diese Spindelwalzen 22 und ist korrespondierend dazu auch die Innenseite des Gehäuses 24 der Spindelmutter 20 mit einem System grober Rillen 26 und entsprechender Stege 28 versehen (Fig. 3). Diese groben Rillen 26 und Stege 28 weisen keine Steigung auf sondern sind konzentrisch angeordnet. Die dem feinen Gewinde 30 entsprechende feine Umfangsprofilierung 31 kann sowohl mit als auch ohne Steigung ausgebildet sein.

Während die Walzen 22 innenseitig auf dem feinen Gewinde 30 der Spindel(stange) 18 abrollen, rollen die Walzen 22 mit ihrer Außenseite nicht auf dem feinen Gewinde 30 ab, sondern die Walzen 22 rollen mit ihren groben Rillen 26 auf den auf der Innenseite des Spindelmutter-Gehäuses 24 befindlichen, groben Stegen 28 ab. Die Stege (Zähne) 28 auf der Innenseite des Spindelmutter-Gehäuses 24 dienen dabei zur Führung der Walzen 22, wobei die ringförmigen Stege 28 in die auf dem Umfang der Walzen 22 befindlichen konzentrischen Rillen 26 eingreifen. Somit ergibt sich keine Axialbewegung zwischen den Walzen 22 und dem Spindelmutter-Gehäuse 24.

Da der wirksame Radius zwischen den walzenförmigen Rollenkörpern 22 und der Spindelstange 18 nicht mit dem wirksamen Radius zwischen Rollenkörper 22 und dem Gehäuse 24 der Spindelmutter 20 identisch ist, gewinnt man einen zusätzlichen Freiheitsgrad für die Gestaltung des anzustrebenden übersetzungsverhältnisses. Die resultierende übersetzung ist nicht nur durch die Feinheit der Spindelsteigung gegeben, sondern man könnte unter Berücksichtigung der mit den Walzen 22 zu wählenden Geometrie sogar eine Gewindesteigung Null realisieren.

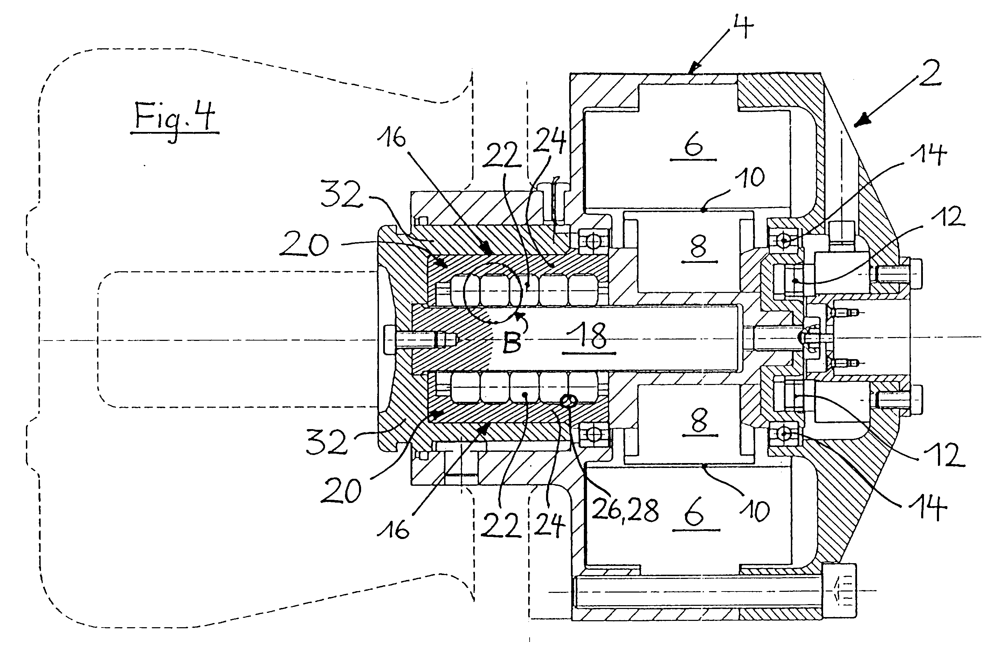

Die in der Fig. 4 dargestellte alternative Ausführungsform des erfindungsgemäßen Bremsaktors 2 umfaßt ebenfalls einen Elektromotor 4 (rechts in der Abbildung) und einen mit Bremsbelag (nicht dargestellt) versehenen Bremskolben 32 (links im Bild). Dabei steht der aus einem Ständer 6 und einem Läufer 8 bestehende Elektromotor 4 ebenfalls über eine Planeten-Wälz-Gewindespindel 16 mit dem Bremskolben 32 in Wirkverbindung. In dieser alternativen Ausführungsform wird aber nicht die Spindelstange 18' sondern die Spindelmutter 20 vom Läufer 8 des Motors 4 angetrieben.

Dabei ist die Spindelmutter 20 drehfest mit dem Läufer 8 des Motors 4 verbunden und die Spindelstange 18' erfährt bei Rotation des Läufers 8 einen Vortrieb. Der Läufer 8 des Motors 4 ist mit einer Hohlachse zur Aufnahme der Spindelstange 18' versehen. An seiner Rückseite ist der Läufer 8 mit einem Radial- 14 und mit einem Axiallager (Drucklager) 12 abgestützt.

Bei Betätigung des Bremsaktors 2 wird die Spindelmutter 20 vom Läufer 8 des Elektromotors 4 angetrieben. Durch die Rotation der Spindelmutter 20 wird die verdrehgesicherte Spindelstange 18' samt dem am Bremskolben 32 befestigten Bremsbelag vorgetrieben (oder zurückgefahren). Ähnlich wie an dem oben beschriebenen Ausführungsbeispiel kann an dieser Ausführungsform bei Verschleiß oder für die genauere Justage des Luftspalts der Bremse die Spindelmutter 20 gegenüber dem Bremskolben 32 um einen Nachstellweg von ca 25 mm nachgestellt werden.
Auch bei dieser Ausführungsform kann der Hub des Bremskolbens 32 bei starker Betätigung der Bremse rund 1 mm betragen.

Ähnlich wie bei der oben beschriebenen Ausführungsform besteht die Spindel 16 nicht einfach aus einer Spindel(stange) 18' mit sich darauf schraubenförmig abwälzender (Spindel-)Mutter 20. Auch hier ist die Spindelstange 18' von einer Anzahl walzenförmiger, mit Umfangsprofilierung 31 versehener Rollenkörper 22 umgeben, die sich innerhalb der Spindelmutter 20 zwischen der Spindelstange 18' und dem Gehäuse 24 der Spindelmutter 20 befinden.

Zur Halterung und Lagerung sind auch in dieser Ausführungsform die Spindelwalzen 22 und korrespondierend dazu die Innenseite des Gehäuses 24 der Spindelmutter 20 mit einem System grober Rillen 26 und entsprechender Stege versehen (Fig. 3). Auch hier weisen die groben Rillen 26 und Stege 28 keine Steigung auf sondern sind konzentrisch angeordnet; die dem feinen Gewinde 30 entsprechende feine Umfangsprofilierung 31 kann sowohl mit als auch ohne Steigung ausgebildet sein.

Auch die Wirkungsweise der bei dieser zweiten Ausführungsform zum Einsatz gelangenden Planeten-Wälz-Gewindespindel entspricht der Wirkungsweise der einleitend beschriebenen ersten Ausführungsform.

## Patentansprüche

1. Bremsaktor (2) für eine elektrisch betätigbare Fahrzeugbremse,
deren Bremsbacken mit Hilfe eines als elektrischen Antrieb dienenden Elektromotors (4) an eine Bremsscheibe anpreßbar sind,
wobei der Elektromotor (4) über eine in Verschieberichtung der Bremsbacken angeordneten Spindel (16) mit einem auf die Bremsbacken einwirkenden, axial verschiebbar gelagerten Bremskolben (32) verbunden ist, wobei
die Spindel eine Planeten-Wälz-Gewindespindel (16) ist, bestehend aus:
einer Spindelstange (18) und einer Spindelmutter (20), wobei die Spindelmutter (20) aus einem Gehäuse (24) und zwischen Spindelstange (18) und Gehäuse (24) rollbar angeordneten walzenförmigen Rollenkörpern (22) besteht, wobei wiederum einerseits die Spindelstange (18) mit einem feinen Gewinde (30) und die walzenförmigen Rollenkörper (22) mit einer entsprechenden Umfangsprofilierung (31) versehen sind,
**dadurch gekennzeichnet,** daß andererseits die Innenseite des Spindelmutter-Gehäuses (24) mit groben ringförmigen Stegen (28) und die Umfangsflächen der walzenförmigen Rollenkörper (22) mit entsprechend groben ringförmigen Rillen (26) versehen sind.

2. Bremsaktor nach Anspruch 1,
**dadurch gekennzeichnet,**
daß die Achse des Elektromotors (4) in gleicher Weise als Spindelstange (18) dient.

3. Bremsaktor nach Anspruch 1 oder 2,
**dadurch gekennzeichnet,**
daß der Bremskolben (32) drehgesichert ist und mit der Spindelmutter (20) eine Einheit bildet.

4. Bremaktor nach einem der Ansprüche 1 - 3,
**dadurch gekennzeichnet,**
daß der Bremskolben (32) über einen Hohlraum (38) zur Aufnahme des Spindelhubs verfügt, dessen Länge als Nachstellweg (36) für die Bremse dient.

5. Bremsaktor nach Anspruch 1,
**dadurch gekennzeichnet,**
daß der Elektromotor (4) drehfest mit der Spindelmutter (20) verbunden ist und die Spindelstange (18') auf dem Bremskolben (32) ruht.

6. Bremsaktor nach Anspruch 5,
**dadurch gekennzeichnet,**
daß der Läufer (8) des Elektromotors (4) einen inneren Durchmesser aufweist, der die Spindelstange (18') aufnehmen kann und die Nachstellbewegung ermöglicht.

## Claims

1. Brake actuator (2) for an electrically actuatable vehicle brake,
the brake shoes of which can be pressed against a brake disc by means of an electromotor (4), which serves as the electrical drive,
wherein the electromotor (4) is connected to an axially displaceably mounted brake piston (32), which acts upon the brake shoes, via a spindle (16) disposed in the direction of displacement of the brake shoes,
and wherein the spindle is a threaded rolling planetary spindle (16),
said brake actuator comprising:
a spindle rod (18) and a spindle nut (20),
wherein the spindle nut (20) comprises a housing (24) and cylindrical rolling bodies (22), which are disposed in a rollable manner between spindle rod (18) and housing (24), and wherein, in turn, on the one hand, the spindle rod (18) is provided with a fine thread (30), and the cylindrical rolling bodies (22) are provided with a corresponding circumferential profiling (31),
characterised in that, on the other hand, the inside of the spindle nut housing (24) is provided with coarse annular webs (28), and the circumferential faces of the cylindrical rolling bodies (22) are provided with correspondingly coarse annular grooves (26).

2. Brake actuator according to claim 1, characterised in that the shaft of the electromotor (4) serves in identical manner as spindle rod (18).

3. Brake actuator according to claim 1 or 2, characterised in that the brake piston (32) is non-rotatable and forms a unit with the spindle nut (20).

4. Brake actuator according to one of claims 1 - 3, characterised in that the brake piston (32) has a cavity (38) for receiving the spindle stroke, the length of which serves as the adjustment path (36) for the brake.

5. Brake actuator according to claim 1, characterised in that the electromotor (4) is non-rotatably connected to the spindle nut (20), and the spindle rod (18') rests on the brake piston (32).

6. Brake actuator according to claim 5, characterised in that the rotor (8) of the electromotor (4) has an inner diameter which can accommodate the spindle rod (18') and renders possible the adjustment movement.

## Revendications

1. Moteur de frein (2) pour un frein de véhicule à manoeuvre électrique,
dont les mâchoires de frein peuvent être pressées contre un disque de frein à l'aide d'un moteur électrique (4) servant de mécanisme d'entraînement électrique,
dans le cas duquel le moteur électrique (4) est relié, par l'intermédiaire d'une tige (16) disposée selon la direction de coulissement des mâchoires de frein, avec un piston de frein (32) qui agit sur les mâchoires de frein et peut coulisser axialement, dans le cas duquel la tige est une vis-mère à rouleaux satellites (16), constituée de
un fût de vis-mère (18) et un écrou de vis-mère (20), dans le cas duquel l'écrou de vis-mère (20) est constitué d'une cage (24) et de rouleaux cylindriques (22) disposés, avec liberté de rouler, entre le fût de vis-mère (18) et la cage (24),
dans le cas duquel à nouveau d'une part le fût de vis-mère (18) présente un filetage fin (30) et les rouleaux cylindriques (22), un profilage périphérique correspondant (31),
caractérisé par le fait
que d'autre part la face intérieure de la cage (24) de l'écrou présente des nervures annulaires grossières (28) et les surfaces périphériques des rouleaux cylindriques (22), des rainures annulaires grossières correspondantes (26).

2. Moteur de frein selon la revendication 1,
caractérisé par le fait
que l'axe du moteur électrique (4) sert de la même façon de fût (18) de la vis-mère.

3. . Moteur de frein selon la revendication 1 ou 2,
caractérisé par le fait
que le piston de frein (32) n'est pas libre en rotation et forme une unité avec l'écrou (20) de vis-mère.

4. Moteur de frein selon l'une des revendications 1-3,
caractérisé par le fait
que le piston de frein (32) dispose d'un espace creux (38) pour autoriser à la vis-mère un déplacement dont la longueur sert de course de reprise de réglage (36) pour le frein.

5. Moteur de frein selon la revendication 1,
caractérisé par le fait
que le moteur électrique (4) est relié, sans liberté de rotation relative, à l'écrou (20) et que le fût (18') repose sur le piston de frein (32).

6. Moteur de frein selon la revendication 5,
caractérisé par le fait
que le rotor (8) du moteur électrique (4) présente un diamètre intérieur qui peut recevoir le fût (18') de la vis-mère et autorise le déplacement de reprise de réglage.
